Europäisches Patentamt

European Patent Office

Office européen des brevets

(11) Numéro de publication: **0 298 859 B1**

# FASCICULE DE BREVET EUROPEEN

(45) Date de publication de fascicule du brevet: **30.09.92** (51) Int. Cl.⁵: **B65G  65/23**

(21) Numéro de dépôt: **88401751.8**

(22) Date de dépôt: **05.07.88**

(54) **Dispositif pour transvaser des matériaux granulaires, pulvérulents ou liquides.**

(30) Priorité: **08.07.87 FR 8709701**

(43) Date de publication de la demande:
**11.01.89 Bulletin  89/02**

(45) Mention de la délivrance du brevet:
**30.09.92 Bulletin  92/40**

(84) Etats contractants désignés:
**BE CH DE GB IT LI**

(56) Documents cités:
**DE-A- 2 108 041**
**US-A- 4 569 623**

(73) Titulaire: **COMMISSARIAT A L'ENERGIE ATO-MIOUE Etablissement de Caractère Scientifique Technique et Industriel**
**31/33, rue de la Fédération**
**F-75015 Paris(FR)**

(72) Inventeur: **Noe, Claude**
**Chemin de la Trevaresse**
**F-13770 Venelles(FR)**

(74) Mandataire: **Mongrédien, André et al**
**c/o BREVATOME 25, rue de Ponthieu**
**F-75008 Paris(FR)**

# Description

La présente invention a pour objet un dispositif pour transvaser des matériaux granulaires, pulvérulents, liquides ou analogues d'un récipient vers un autre récipient, un conteneur ou un réservoir. L'intérêt primordial de ce dispositif est que le transvasement se fait de manière sûre et suivant un chemin entièrement fermé, ce qui rend ce dispositif, par ailleurs applicable à tous les matériaux appartenant aux catégories mentionnées ci-dessus, particulièrement intéressant pour ceux qui présentent un caractère polluant ou dangereux et pour lesquels il faut éviter un écoulement dans le milieu extérieur.

Pour de tels matériaux, le transvasement ordinaire effectué par renversement du récipient au-dessus de l'embouchure du réservoir n'est donc pas approprié, car il existe des risques de renversement prématuré du récipient et d'écoulement de particules ou de fluide autour de l'embouchure.

La sécurité peut être améliorée au moyen d'un raccord flexible lié au réservoir et s'adaptant sur l'ouverture du récipient, mais ce dernier doit alors être spécialement adapté à ce raccord, qui est par ailleurs assez fragile et ne possède donc pas une fiabilité suffisante. En particulier, il faut insérer des joints d'étanchéité que le produit transvasé finit tôt ou tard par atteindre et qu'il corrode alors.

On peut adresser des critiques similaires au dispositif décrit dans le brevet US-A-4 569 623. Ce document, qui correspond au préambule de la revendication 1, décrit un dispositif qui comprend deux coudes mis bout à bout de part et d'autre d'un plan de joint vertical et dont l'un d'eux pivote parallèlement à ce plan. Le récipient est attaché à son extrémité libre et amené d'une position inférieure, ouverture en haut, à une position supérieure renversée où son contenu s'écoule dans les coudes. Rien n'est cependant prévu contre la poudre qui ne va pas manquer de s'introduire dans le plan de joint. Or les coudes ne peuvent être emboîtés l'un dans l'autre car il faut que le récipient soit vertical dans sa position d'accrochage et dans sa position de décharge, ce qui imposerait deux coudes à angle droit unis par des tronçons horizontaux où la poudre ne pourrait s'écouler.

L'invention représente un perfectionnement à ces dispositifs de transvasement et permet d'échapper à leurs inconvénients. Elle comprend un raccord formé de trois parties rigides coudées emboîtées les unes dans les autres dont l'une est solidaire du réservoir et une autre est attelée au récipient, ces parties étant maintenues de façon à ne pas pouvoir se séparer et définissant un chemin de transvasement des produits car les différentes parties peuvent tourner par rapport aux autres de manière à définir en particulier deux positions.

Dans la première de ces positions, le récipient est au-dessous du raccord, placé verticalement avec son ouverture vers le haut ; dans la seconde, il est renversé et au-dessus du raccord de telle sorte que son contenu s'écoule par gravité dans le chemin de transvasement jusque dans le réservoir. Dans une réalisation favorite, les rotations sont effectuées simultanément à l'aide d'un train d'engrenages solidarisant les différentes parties du raccord et actionné par un moteur.

Plus précisément, l'invention, qui en définie par la revendication 1, a pour objet un dispositif pour transvaser des matériaux granulaires, pulvérulents ou liquides contenus dans un premier récipient ouvert vers un second récipient ouvert, comprenant un attelage se composant d'une structure de maintien et de serrage du premier récipient plaquant son ouverture contre une embouchure prolongée par une première partie de raccordement, un coude, une seconde partie de raccordement communiquant avec le second récipient et placé au-dessus de son ouverture, mais en-dessous du coude, le coude s'ajustant dans la seconde partie de raccordement et la première partie de raccordement s'ajustant dans le coude, le coude pouvant tourner par rapport à la seconde partie de raccordement et la première partie de raccordement pouvant tourner par rapport au coude, des moyens de liaison axiale empêchant d'extraire le coude de la seconde partie de raccordement et la première partie de raccordement du coude, la première partie de raccordement et le coude pouvant tourner respectivement par rapport au coude et par rapport à la seconde partie de raccordement de façon à ce que l'attelage soit mû entre une position où il est au-dessous du coude et où le premier récipient a son ouverture en haut et une position où il est au-dessus du coude et où le premier récipient a son ouverture en bas.

Dans une réalisation avantageuse, le coude est environ à angle droit et les raccords font des angles d'environ 45°. Enfin, selon une caractéristique avantageuse cumulable avec la précédente, le coude est mis en rotation au moyen d'un moteur par l'intermédiaire d'une transmission, et d'autre part, chaque raccord comprend une surface dentée, le coude comprend un arbre tournant terminé par deux pignons dentés, chaque pignon s'engrenant avec une surface dentée respective, les rapports du nombre de dents de chaque surface dentée divisé par le nombre de dents du pignon s'y engrenant étant identiques, impliquant une rotation du coude par rapport à la seconde partie de raccordement de même valeur que la rotation de la première partie de raccordement par rapport au coude.

On va à présent décrire plus précisément l'invention à l'aide des figures données en annexe à titre illustratif et non limitatif, et dont l'énumération est la suivante :

- la figure 1 représente l'allure générale du dispositif et illustre son fonctionnement et ses avantages ;
- la figure 2 est un détail de la figure 1 en coupe partielle,
- les figures 3 et 4 sont deux détails de la figure 2.

Le dispositif peut se décomposer en plusieurs grandes parties comme on le voit sur les différentes figures. Le récipient R1 dont il faut transvaser le contenu dans un réservoir R2 est maintenu en place dans un dispositif d'attelage A qui se raccorde par un coude B à une partie fixe C comprenant une tuyauterie débouchant dans le réservoir R2. Un ensemble moteur D assure le mouvement du coude B et du dispositif d'attelage A.

Le dispositif d'attelage A comprend tout d'abord un socle 1 sur lequel on pose le récipient R1, un entonnoir 2 au-dessus du récipient R1 et un premier raccord 3 solidaire de l'entonnoir 2 dont il prolonge l'ouverture et qui est coudé de manière à faire un angle de 45c environ. Le socle 1 est muni de montants 4 parallèles et disposés latéralement par rapport au récipient R1, et dont l'extrémité coulisse dans des trous 5 de l'entonnoir 2 de manière à autoriser un mouvement de translation entre le socle 1 et l'entonnoir 2, dont l'écartement est réglé par un vérin 6 parallèles aux montants 4. Le vérin 6 permet tour à tour d'écarter l'entonnoir 2 du socle 1 de manière à permettre d'introduire le récipient R1 entre eux, puis de les rapprocher de manière à serrer et maintenir solidement en place le récipient R1. La surface interne conique de l'entonnoir 2, que l'on référence généralement par 7, entre alors en contact avec le rebord 8 du récipient R1. L'intérieur 9 de l'entonnoir 2 et du premier raccord 3 communique donc avec l'intérieur 10 du récipient R1 et le surmonte.

L'entonnoir 2 peut être spécialement adapté au récipient R1. Sa surface interne 7 est alors décomposée en deux surfaces adjacentes coniques 11 et 12. Ces deux surfaces ont des inclinaisons différentes de manière à délimiter un raccordement concave de même diamètre que le diamètre du rebord 8, ce qui permet un maintien en place parfaitement stable du récipient R1.

Le premier raccord 3 est muni successivement, en s'éloignant du socle 2, d'une roue dentée 13 qui lui est solidaire (vissée ou emmanchée à force), d'une portée cylindrique de roulement 14 et d'une portée cylindrique de raccordement 15. Ces deux portées sont sur la surface extérieure du premier raccord 3, et le diamètre de la portée de raccordement 15 est plus petit que le diamètre de la portée de roulement 14.

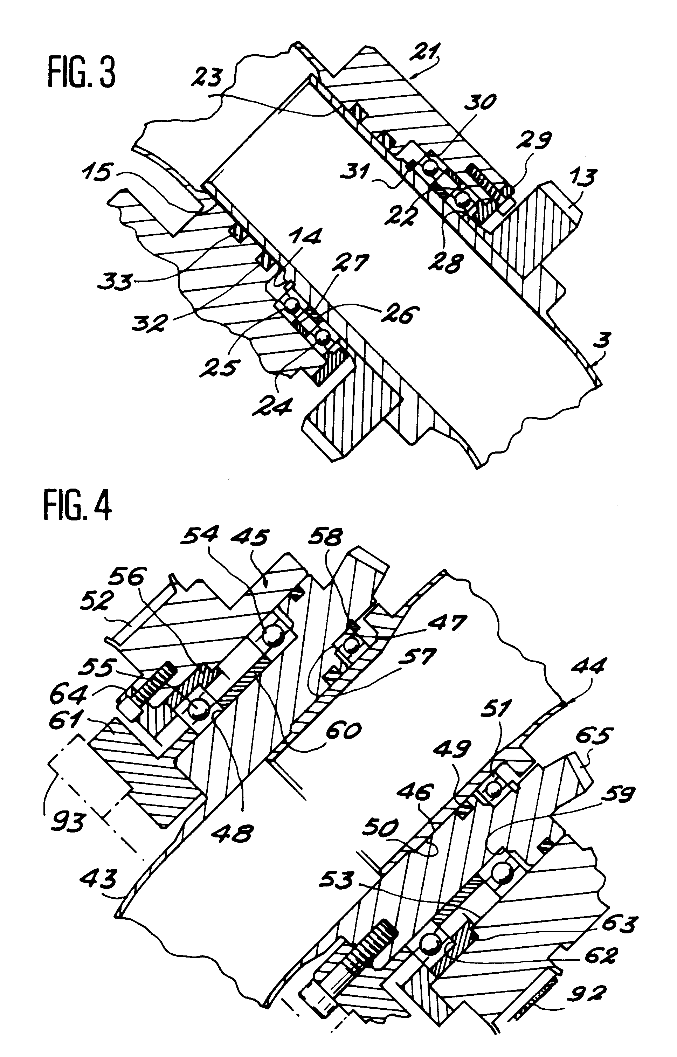

Le coude B fait un angle d'environ 90°. Comme le premier raccord 3, il est tubulaire. Il comprend à une de ses extrémités 21 une première portée de roulement interne 22 cylindrique et une première portée de raccord 23 interne également cylindrique et de plus petit diamètre. Quand le dispositif est assemblé, le premier raccord 3 s'ajuste dans l'extrémité 21 du coude B, de telle façon que les portées de raccordement 15 et 23 soient espacées d'un léger jeu. Par ailleurs, deux roulements à billes 24 et 25 sont logés entre les portées de roulement 14 et 22, et ils sont montés de manière à empêcher la séparation du coude B et du dispositif d'attelage A. La figure 3 représente le montage adopté à cette fin. Deux entretoises 26 et 27, proches respectivement du premier raccord 3 et de l'extrémité 21 du coude B, assurent l'écartement des deux roulements 24 et 25 ; un des roulements 24 est par ailleurs bloqué en translation du côté opposé, d'une part par un épaulement 28 du premier raccord 3, et d'autre part, par une bride 29 vissée au bout de l'extrémité 21 du coude B ; le second roulement 25 est bloqué en translation, de l'autre côté des entretoises 26 et 27, d'une part par un épaulement 30 de l'extrémité 21 et d'autre part par un anneau élastique 31 inséré dans une gorge exécutée sur la portée de roulement 14 du premier raccord 3.

La portée de raccord 23 de l'extrémité 21 est entaillée de deux gorges recevant chacune un joint d'étanchéité 32 et 33.

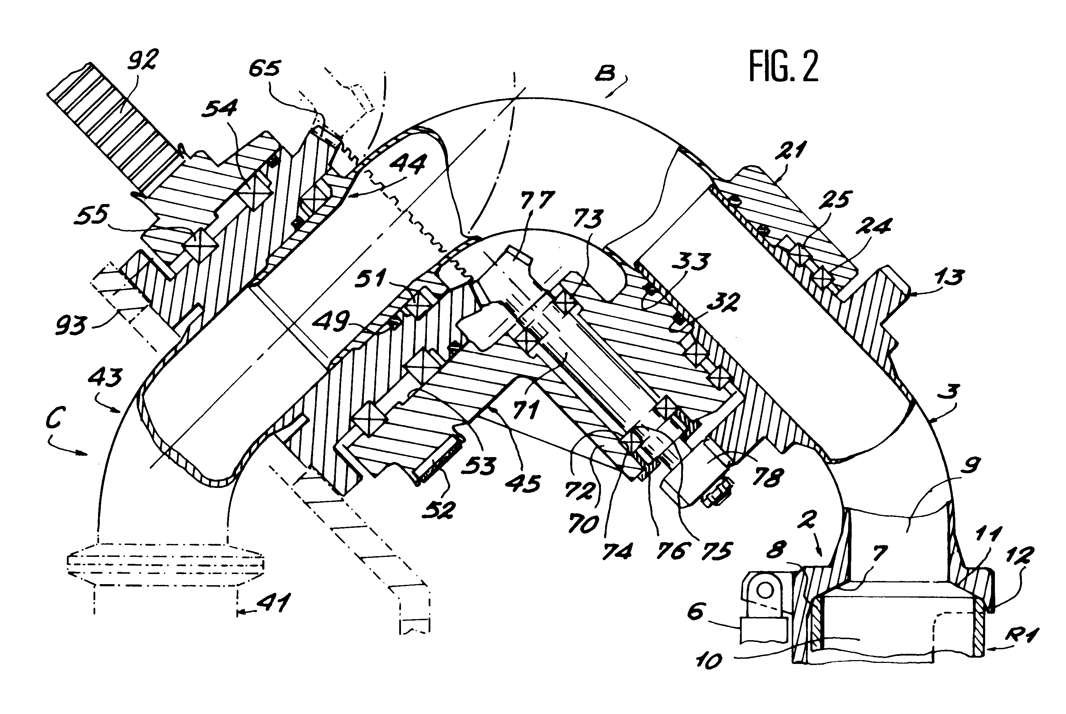

La partie fixe C comprend tout d'abord (figure 2) un tuyau 41 débouchant dans le réservoir R2 ; elle comprend également un second raccord 43 faisant un angle d'environ 45° et joignant le tuyau 41 à l'autre extrémité 44 du coude B et à une couronne 45 solidaire du coude B. La seconde extrémité 44 du coude B s'ajuste dans le second raccord 43, et la couronne 45 est disposée autour du second raccord 43.

On se reporte maintenant essentiellement à la figure 4.

Le second raccord 43 est tubulaire et comprend, sur sa surface interne, une portée de raccordement 46 et une première portée de roulement 47 de plus grand diamètre, et il comprend sur sa surface extérieure une seconde portée de roulement 48 de plus grand diamètre que la première portée de roulement 47 (toutes ces portées sont cylindriques). La portée de raccordement 46 est entaillée d'une gorge destinée à loger un joint d'étanchéité circonférentiel 49.

La seconde extrémité 44 du coude B est munie extérieurement d'une portè cylindrique de raccordement et de roulement 50. Un roulement 51 est disposé entre la portée de roulement 50 de la seconde extrémité 44 et la première portée de roulement 47 du second raccord 43.

La couronne 45 est munie extérieurement d'une surface cannelée cylindrique 52 et possède en outre une surface interne cylindrique de roulement 53. Un roulement 54 est disposé entre la seconde portée de roulement 48 du second raccord 43 et la portée de roulement 53 de la couronne 45, un autre roulement 55 est disposé entre la seconde portée de roulement 48 du second raccord 43 et une entretoise 56 disposée sur la surface de roulement 53 de la couronne 45.

Le roulement 51 est maintenu en place axialement entre un épaulement 57 et un anneau élastique 58, tous deux établis sur la première surface de roulement 47 du second raccord 53. La couronne 45 et donc le coude B sont maintenus en place axialement par rapport au second raccord 43 par l'intermédiaire des roulements 54 et 55 : le roulement 54 est maintenu en place axialement entre un épaulement 59 et une entretoise 60 établis sur la seconde surface de roulement 48 du second raccord 43 ; l'autre roulement 55 est maintenu en place axialement entre l'entretoise 60 et une bride 61 vissée sur le second raccord 43 d'une part, entre un épaulement 62 de l'entretoise 66 (elle-même en appui axial sur un épaulement 63 de la couronne 45) et une bride 64 vissée sur la couronne 45 d'autre part. On voit qu'il est impossible d'extraire le coude B de la partie fixe C qui sont en revanche en rotation relative. Les surfaces de raccordement respectives 46 et 50 sont en effet distantes d'un faible jeu et le mouvement s'effectue par l'intermédiaire des trois roulements 51, 54 et 55.

Le second raccord 43 est enfin muni d'une couronne dentée 65 à son extrémité opposée au tuyau 41. D'après la figure 2, le coude B comprend, reliant sa première extrémité 21 à la couronne 45, un palier 70 dans lequel un arbre 71 peut tourner à l'aide d'une paire de roulements 72 et 73. Le positionnement axial de l'arbre 71 dans le palier 70 est assuré par le placement d'un des roulements 72 entre des épaulements 74 et 75 appartenant respectivement au palier 70 et à l'arbre 71 et une bride 76 vissée sur le palier 70. Les roulements 72 et 73 sont montés serrés sur l'arbre 71. L'arbre 71 est muni à ses deux extrémités d'un pignon 77 et 78 ; un pignon 77 engrène la couronne dentée 65 du second raccord 43, et le second pignon 78 engrène la roue dentée 13 solidaire du premier raccord 3.

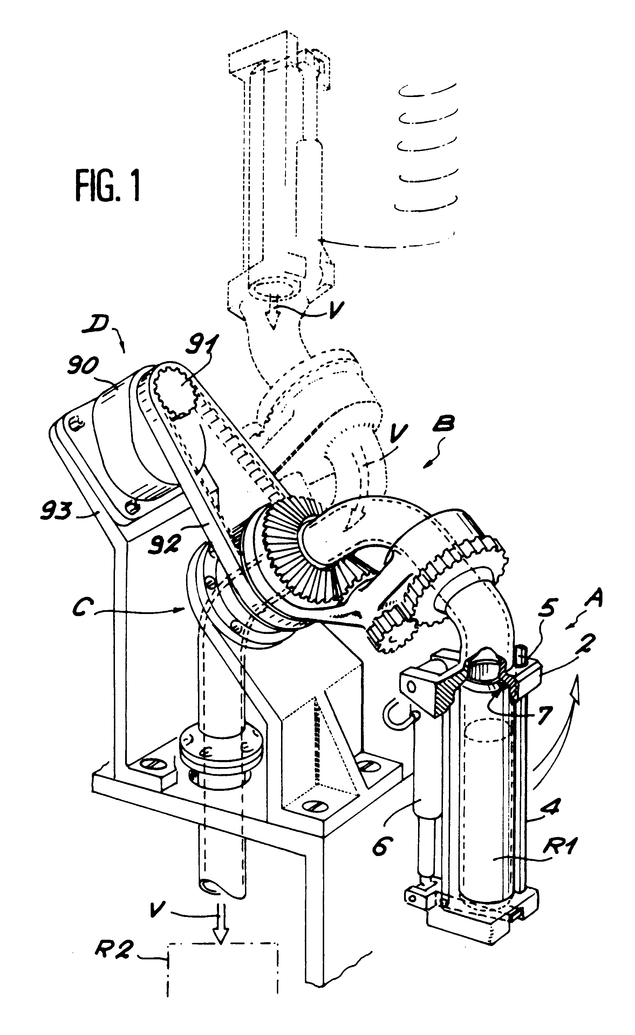

On complète la description en revenant à la figure 1. L'ensemble moteur D comprend un moteur électrique 90 dont l'arbre est muni d'une roue cannelée 91 tendant une courroie crantée 92 avec la surface cannelée 52 de la couronne 45. Le moteur 90 est fixé sur un bâti 93 ; il est immobile par rapport à la partie fixe C et au réservoir R2.

Le fonctionnement du dispositif est le suivant : le récipient R1 est posé sur le socle 1, après quoi le vérin 6 se rétracte et plaque le rebord 8 contre l'entonnoir 2. On arrive à la configuration représentée figures 1 et 2. On met alors le moteur 90 en marche, la courroie crantée 92 se met à défiler et entraîne en rotation la couronne 45 et par conséquent le coude B. Le premier pignon 77 parcourt donc la circonférence de la couronne dentée 65, est mis en rotation par celle-ci, et par l'intermédiaire de l'arbre 71 et du second pignon 78, transmet à son tour une rotation à la roue dentée 13 et au dispositif d'attelage A. Avantageusement, les rapports du nombre de dents de la roue dentée 13 divisé par le nombre de dents du second pignon 78 et du nombre de dents de la couronne dentée 65 divisé par le nombre de dents du premier pignon 77 sont identiques, si bien qu'une rotation du coude B par rapport à la partie fixe C correspond à une rotation de même valeur du dispositif d'attelage A par rapport au coude B. Avec un tuyau 41 vertical et un second raccord 43 faisant un angle de 45°, un coude B faisant un angle de 90° et un premier raccord 3 faisant un angle de 45°, le récipient R1 étant vertical au départ, l'action du moteur 90 finit par conférer au dispositif l'allure représentée en superposition sur la figure 1 : le coude B a accompli une rotation d'un demi-tour et le dispositif d'attelage A est maintenant en gros vertical et au-dessus du coude B, si bien que le récipient R1 est vertical mais renversé, et que son contenu s'en échappe par gravité suivant les flèches V dans l'intérieur du premier raccord 3, du coude B, du second raccord 43 et du tuyau 41 vers le réservoir R2.

Ce trajet ne comprend que des pentes d'au moins 45°, ce qui exclut donc en principe toute retenue de matériau par adhérence le long des parois. De plus, les ajustements du premier raccord 3 dans la première extrémité 21 du coude B et de la seconde extrémité 44 du coude B dans le second raccord 43, empêchent le contenu du récipient R1 de passer entre les portées de raccordement et d'attaquer les joints d'étanchéité. Les mouvements impliquent des rotations autour d'elles-mêmes de toutes les sections du coude B et du dispositif d'attelage A, qui favorisent le décollement de la matière qui pourrait y adhérer. Enfin, on comprend sans peine que l'incorporation d'un tel dispositif à une chaîne de transfert automatique serait facile : il suffirait alors de placer le socle 1 à l'extrémité d'une piste roulante transportant des récipients R1 et de placer ceux-ci sur le socle à l'aide d'une pince. La pince récupérerait ensuite les récipients vides après une rotation complète du dispositif qui ne nécessiterait qu'un asservissement simple.

Une application envisagée d'ores et déjà est le transfert de poudre d'oxyde de plutonium radioactive.

## Revendications

1. Dispositif pour transvaser des matériaux granulaires, pulvérulents ou liquides contenus dans un premier récipient ouvert (R1) vers un second récipient ouvert (R2) comprenant un attelage (A) se composant d'une structure de maintien (1, 2) et de serrage (6) du premier récipient (R1) plaquant son ouverture (8) contre une embouchure (9) prolongée par une première partie de raccordement (3), une seconde partie de raccordement (C) communiquant avec le second récipient (R2) et placée au-dessus de son ouverture, l'attelage (A) pouvant être mû entre une première position où le premier récipient (R1) a son ouverture en haut et une seconde position où le premier récipient (R1) a son ouverture en bas, caractérisé en ce qu'il comprend un coude (B) placé au-dessus de la seconde partie de raccordement (C), une extrémité du coude (B) s'ajustant dans la seconde partie de raccordement (C) et la première partie de raccordement (3) s'ajustant dans l'autre extrémité du coude (B), des moyens de liaison axiale (24, 25, 54, 55) empêchant d'extraire le coude (B) de la seconde partie de raccordement (C) et de la première partie de raccordement (3) du coude (B), la première partie de raccordement (3) et le coude (B) pouvant tourner respectivement par rapport au coude (B) et par rapport à la seconde partie de raccordement (C) de façon à ce que l'attelage (A) soit mû entre ladite première position où il est au-dessous du coude (B) et où le premier récipient (R1) a son ouverture en haut et ladite seconde position où il est au-dessus du coude (B) et où le premier récipient (R1) a son ouverture en bas.

2. Dispositif selon la revendication 1, caractérisé en ce que le coude (B) est environ à angle droit et en ce que les parties de raccordement (3, C) font des angles d'environ 45°.

3. Dispositif selon l'une quelconque des revendications 1 ou 2, caractérisé en ce que la seconde partie de raccordement (C) porte un moteur (90) entraînant par l'intermédiaire d'une transmission (92) le coude (B) en rotation.

4. Dispositif selon l'une quelconque des revendications 1 à 3, caractérisé en ce que chaque partie de raccordement (3, C) comprend une surface dentée (13, 65), le coude (B) comprend un arbre tournant (71) terminé par deux pignons (77, 78) dentés, chaque pignon (77, 78) s'engrenant avec une surface dentée (13, 65) respective, les rapports du nombre de dents de chaque surface dentée divisé par le nombre de dents du pignon s'y engrenant étant identiques, impliquant une rotation du coude (B) par rapport à la seconde partie de raccordement (C) de même valeur que la rotation de la première partie de raccordement (3) par rapport au coude (B).

5. Dispositif selon l'une quelconque des revendications 1 à 4, caractérisé en ce que les ajustements du coude (B) avec chacune des parties de raccordement (3, C) sont munis de joints d'étanchéité (32, 33, 49).

## Claims

1. Apparatus for the transfer of granular, pulverulent or liquid materials contained in a first open container (R1) to a second open container (R2), comprising an attachment means (A) constituted by a holding (1, 2) and fixing (6) structure of the first container (R1), whose opening (8) engages with a mouth (9) extended by a first connecting part (3), a second connecting (C) communicating with the second container (R2) is placed above its opening, the attachment means (A) being movable between a first position where the first container (R1) has its opening at the top and a second position where the first container (R1) has its opening at the bottom, characterized in that it comprises a bend (B) placed above the second coupling part (C), an end of the bend (B) being fitted into the second coupling (C) and the first coupling (3) being fitted into the other end of the (B), axial connecting means (24, 25, 54, 55) making it impossible to extract the bend (B) from the second coupling part (C) and the first coupling (3) from the bend (B), the first coupling (3) and the bend (B) being able to rotate respectively with respect to the bend (B) and with respect to the second coupling part (C), in such a way that the attachment means (A) is moved between said first position where it is below the bend (B) and where the first container (R1) has its opening at the top and said second position where it is above the bend (B) and where the first container (R1) has its opening at the bottom.

2. Apparatus according to claim 1, characterized in that the bend (B) is approximately at right angles and that the coupling (3, C) form angles of approximately 45°.

3. Apparatus according to either of the claims 1 and 2, characterized in that the second coupling part (C) carries a motor (90) rotating the bend (B) via a transmission (92).

4. Apparatus according to any one of the claims 1 to 3, characterized in that each coupling (3, C) comprises a toothed surface (13, 65), the bend (B) comprising a rotary shaft (71) terminated by two toothed pinions (77, 78), each pinion (77, 78) meshing with a respective toothed surface (13, 65) the ratios of the number of teeth of each toothed surface divided by the number of teeth of the pinion meshing therewith being identical, involving a rotation of the bend (B) relative to the second coupling part (C) of the same value as the rotation of the first coupling (3) relative to the bend (B).

5. Apparatus according to any one of the claims 1 to 4, characterized in that the fittings of the bend (B) with each of the coupling parts (3, C) are provided with gaskets (32, 33, 49).

**Patentansprüche**

1. Vorrichtung zum Umfüllen von körnigen, pulverförmigen oder flüssigen Materialien, die in einem ersten, offenen Behälter (R1) enthalten sind, in einen zweiten offenen Behälter (R2), die eine Kupplungsvorrichtung (A) umfaßt, die sich aus einer Trägerstruktur (1, 2) und Festhaltestruktur (6) für den ersten Behälter (R1) zusammensetzt, die seine Öffnung (8) gegen eine durch ein Verbindungsteil (3) verlängerte Einmündung (9) drückt, wobei ein zweiter Teil der Verbindung (C) mit dem zweiten Behälter (R2) in Verbindung steht und oberhalb dessen Öffnung angeordnet ist, wobei die Kupplungsvorrichtung (A) zwischen einer ersten Stellung, in der der erste Behälter (R1) seine Öffnung oben hat, und einer zweiten Stellung, in der der erste Behälter (R1) seine Öffnung unten hat, bewegt werden kann, dadurch gekennzeichnet, daß sie einen Krümmer (B) umfaßt, der über dem zweiten Verbindungsteil (C) angeordnet ist, wobei sich ein Ende des Krümmers (B) nach dem zweiten Teil der Verbindung (C) ausrichtet und sich der erste Teil der Verbindung (3) nach dem anderen Ende des Krümmers (B) ausrichtet, wobei axiale Verbindungsmittel (24, 25, 54, 55), verhindern, daß der Krümmer (B) aus dem zweiten Teil der Verbindung (C) und dem ersten Teil der Verbindung (3) für den Krümmer (B) herausgezogen wird, wobei der erste Teil der Verbindung (3) und der Krümmer (B) sich jeweils bezüglich des Krümmers (B) und bezüglich des zweiten Teils der Verbindung (C) derart drehen können, daß die Kupplungsvorrichtung (A) zwischen der ersten Stellung, in der sie sich unter dem Krümmer befindet und in der der erste Behälter (R1) seine Öffnung oben hat, und der zweiten Stellung, in der sie sich unter dem Krümmer (B) befindet und in der der erste Behälter (R1) seine Öffnung unten hat, bewegt werden kann.

2. Vorrichtung nach Anspruch 1, dadurch gekennzeichnet, daS der Krümmer (B) ungefähr rechtwinklig ist und daß die Verbindungsteile (3, C) Winkel von ungefähr 45° bilden.

3. Vorrichtung nach einem der Ansprüche 1 oder 2, dadurch gekennzeichnet, daß der zweite Teil der Verbindung (C) einen Motor (90) trägt, der über eine Kraftübertragung (92) den Krümmer (B) in Drehung versetzt.

4. Vorrichtung nach einem der Ansprüche 1 bis 3, dadurch gekennzeichnet, daß jeder Verbindungsteil (3, C) einen gezahnte Oberfläche (13, 65) besitzt und daß der Krümmer eine sich drehende Welle (71) besitzt, die von zwei Zahnritzeln (77, 78) begrenzt wird, wobei jedes Ritzel (77, 78) in eine jeweilige gezahnte Oberfläche (13, 65) greift, wobei die Verhältnisse der Zähne jeder gezahnten Oberfläche geteilt durch die Anzahl der Zähne des darin greifenden Ritzels identisch sind, was eine Drehung des Krümmers (B) bezüglich des zweiten Teils der Verbindung (C) mit dem gleichen Betrag wie die Drehung des ersten Teils der Verbindung (3) bezüglich des Krümmers (B) zur Folge hat.

5. Vorrichtung nach einem der Ansprüche 1 bis 4, dadurch gekennzeichnet, daß die Ausrichtungselemente des Krümmers (B) mit jedem der Verbindungsteile (3, C) mit dichtenden Verbindungen (32, 33, 49) versehen sind.

FIG. 1

FIG.2

# FIG. 3

# FIG. 4